# EUROPEAN PATENT APPLICATION

(11) **EP 4 647 139 A1**
(43) Date of publication of application: **12.11.2025**
(21) Application number: 24174338.4
(22) Date of filing: 06.05.2024
(51) Int. Cl.: B01D 19/00, C25B 1/04, C25B 15/08

(54) **GAS-LIQUID SEPARATOR WITH PLATES**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Choudar, Yann, 60388 Frankfurt (DE); Nesselberger, Markus, 60439 Frankfurt (DE); Tadiello, Jean-Philippe, 60439 Frankfurt (DE)
(74) Representative: Air Liquide

(57) **Abstract**

Device (1.1) for separating a gas flow (2.1) and a liquid electrolyte flow (3.1) from a biphasic flow (4.1) comprising:
▪ a separator vessel (5.1) oriented along a horizontal axis (8),
▪ a hold-up plate (9), and
▪ multiple separator plates (10),

wherein the separator vessel (5.1) comprises a biphasic flow inlet (21.1) and a product gas outlet (22.1) and a liquid electrolyte outlet (23.1), wherein the hold-up plate (9) and the multiple separator plates (10) are arranged in the separator vessel (5.1), wherein the hold-up plate (9) is arranged downstream of the multiple separator plates (10),
wherein the hold-up plate (9) is arranged in a hold-up plane (11), and the multiple separator plates (10) are arranged in respective separator planes (12), wherein the multiple separator planes (10) are distanced axially from each other along the horizontal axis (8).

## Description

The present invention relates to a device for separating a product gas flow and a liquid electrolyte flow from a biphasic flow, an arrangement comprising the device and a method to operate the arrangement.

As is known, an arrangement for electrolysis, e.g., alkaline water electrolysis, comprises an electrolyser with multiple electrolysis stacks and a gas-liquid separator. The electrolysis stack comprises pairs of electrodes operating in a liquid electrolyte solution. Those electrodes are allocated to a respective electrode side, the cathode side, and the anode side. The electrodes are structurally separated by a diaphragm. As a result, two product gases, e.g., oxygen and hydrogen, can be produced separately and discharged separately. The liquid electrolyte on the cathode side is called catholyte, the liquid electrolyte on the anode side is called anolyte. From the cathode side and from the anode side, a respective biphasic mixture of liquid electrolyte and product gas flows to the respective gas-liquid separator. It is known to recycle the respective electrolyte with a certain recycle rate and to mix them again with the electrolyte in the electrolyser.

Gas-liquid separators are known. Commonly, gas-liquid separators are designed as empty gravity separators operating according to the gravity effect, wherein the gravity separator is composed of a cylindrical vessel placed horizontally or vertically.

A limited efficiency of the gas-liquid separator and a high recycle rate can lead to product gas bubbles in the liquid electrolyte carry over to the liquid electrolyte in the electrolyser.

In detail, due to recycling, hydrogen bubbles in the catholyte can be carried over from the cathode side via the separator to the anode side of the electrolyser. Oxygen bubbles in the anolyte can be carried over from the anode side via the separator to the cathode side of the electrolyser. This crossover can lead to higher contamination of hydrogen with oxygen and/or higher contamination of oxygen with hydrogen. Increased contamination might generate an explosive mixture after reaching a lower explosive limit.

An object of the present invention is to increase the separation efficiency of a device for separating a biphasic flow of an electrolysis stack into a gas flow and a liquid electrolyte and preventing explosive gas mixtures in an arrangement for electrolysis to increase safety.

These tasks are solved with a device, an arrangement, and a method according to the independent claims. Further advantageous embodiments are given in the dependent claims. The features shown in the claims and in the description can be combined with one another in any technologically meaningful way.

According to the present invention, a device for separating a gas flow and a liquid electrolyte flow from a biphasic flow is presented, which comprises:
▪ a separator vessel oriented along a horizontal axis,
▪ a hold-up plate, and
▪ multiple separator plates,
wherein the separator vessel comprises a biphasic flow inlet and a gas outlet and a liquid electrolyte outlet. The hold-up plate and the multiple separator plates are arranged in the separator vessel, wherein the hold-up plate is arranged downstream of the multiple separator plates. The hold-up plate is arranged in a hold-up plane, and the multiple separator plates are arranged in respective separator planes. The multiple separator planes are distanced axially from each other along the horizontal axis. In each separator plane remains a respective first opening in a lower section of the separator vessel configured to pass through the liquid electrolyte flow and in the hold-up plane remains a first opening in the lower section of the separator vessel configured to pass through the liquid electrolyte flow. In each separator plane remains a second opening in an upper section of the separator vessel configured to pass through the biphasic flow and in the hold-up plane remains a second opening in the upper section of the separator vessel configured to pass through the product gas flow. The second opening of each separator plane extends further towards a bottom side of the lower section of the separator vessel than the second opening of the hold-up plane.

The device can be used in electrolysis applications. The device can be used for separating the product gas flow and the liquid electrolyte flow from a biphasic flow stemming from an electrolyser.

The electrolyser can electrolyse a medium. Preferably, the medium is liquid, in particular water. Therein, it is not necessary that the medium is pure water. In particular, the medium may contain dissolved salts such as KOH for alkaline electrolysis or electrolysis using anion exchange membrane cells. The electrolysis products are gaseous.

The product gas flow can comprise one of the products of the electrolyser. The biphasic flow is a mixture of the product gas flow and the liquid electrolyte flow that emanates from the electrolyser. In the biphasic flow, the product gas flow can be entrapped partially in the liquid electrolyte flow. In particular, the product gas flow can be formed partially as small bubbles in the liquid electrolyte flow. In particular, the electrolyser can be pressurized. The product gas flow can then be formed as even smaller bubbles in the liquid electrolyte flow.

The separator vessel is configured to separate a liquid phase and a gaseous phase of an incoming biphasic flow from each other. In particular, the separator vessel is configured to separate the liquid electrolyte flow and the product gas flow.

Preferably, the separator vessel is configured as a gravity separator. Two components with different densities, are separated according to their densities. Components with lighter densities with respect to the heavier densities ascend, so that a vertical separation is accomplished. The separator vessel can be cylindrical.

The separator vessel is oriented along a horizontal axis. The separator vessel can be described by having a first end and an opposite second end. In particular, the separator vessel is horizontal.

The separator vessel comprises a biphasic flow inlet and a gas outlet and a liquid electrolyte outlet. Preferably, the biphasic flow inlet is arranged at the first end of the separator vessel, and the gas outlet as well as the liquid electrolyte outlet are arranged at the second end of the separator vessel.

The biphasic flow inlet is configured to let the biphasic flow into the separator vessel. The gas outlet is configured to let the product gas flow out of the separator vessel and the liquid electrolyte outlet is configured to let the liquid electrolyte flow out of the separator vessel.

Preferably, molecules of the product gas flow and molecules of the liquid electrolyte flow can move from the first end of the separator vessel to the second end of the separator vessel. In particular, molecules of the product gas flow can move from the biphasic flow inlet to the gas outlet and molecules of the liquid electrolyte flow can move from the biphasic flow inlet to the liquid electrolyte outlet.

The terms downstream and upstream shall relate to the prevailing flow direction. In particular, the prevailing flow direction can relate to the above described movement of molecules.

The separator vessel can be categorised in the lower section and in the upper section. However, this does not require any structural features that would divide the separator vessel into the lower section and the upper section.

Preferably, the separator vessel has a bottom side and a top side. The bottom side and the top side of the separator vessel can be situated along the horizontal axis.

The hold-up plate and the multiple separator plates are arranged in the separator vessel, wherein the hold-up plate is arranged downstream of the multiple separator plates. The hold-up plate is arranged in a hold-up plane, and the multiple separator plates are arranged in respective separator planes. The multiple separator planes are distanced axially from each other along the horizontal axis.

Preferably, the multiple separator plates are closer to the first end of the separator vessel than to the second end of the separator vessel. Preferably, the most upstream separator plate of the multiple separator plates is adjacent to the first end of the separator vessel. It is, however, particularly preferred that the most upstream separator plate of the multiple separator plates is distanced from the first end of the separator vessel in the direction of the second end of the separator vessel along the horizontal axis.

Preferably, the multiple separator plates are arranged at an angle to the horizontal axis in the separator vessel and/or the hold-up plate is arranged at an angle to the horizontal axis in the separator vessel.

It is particularly preferred that the multiple separator plates are arranged at cross angle to the horizontal axis in the separator vessel and/or the hold-up plate is arranged at cross angle to the horizontal axis in the separator vessel. However, it is not necessary for the multiple separator plates and the hold-up plate to enclose an angle of exactly 90° with the horizontal axis. It is preferred that the multiple separator plates enclose an angle of at least 60° with the horizontal axis and/or that the hold-up plate encloses an angle of at least 60° with the horizontal axis.

The second opening of each separator plane extends further to the bottom side of the lower section of the separator vessel than the second opening of the hold-up plane.

Preferably, the hold-up plate is configured to dam the liquid electrolyte flow in the separator vessel upstream of the hold-up plate. Thus, the hold-up plate can serve the purpose of holding-up the liquid electrolyte flow.

Preferably, the hold-up plane divides the separator vessel along the horizontal axis into two regions. The liquid electrolyte flow can flow from a first region in the separator vessel upstream of the hold-up plane to a second region in the separator vessel downstream of the hold-up plane.

In the hold-up plane remains the first opening in the lower section of the separator vessel configured to pass through the liquid electrolyte flow. Through this first opening the liquid electrolyte can flow from the first region to the second region.

Preferably, the first opening in the hold-up plane is configured to hold-up the liquid electrolyte to form a certain liquid level in the separator vessel upstream of the hold-up plane. It is preferred but not necessary that the amount of liquid electrolyte flowing through the first opening in the hold-up plane corresponds to the amount of liquid electrolyte in the biphasic flow entering the separator vessel via the biphasic flow inlet. Thus, the liquid level in the separator vessel upstream of the hold-up plane can fluctuate.

The advantage of the hold-up plate is that the liquid electrolyte flow can be held-up, which also can be called damming. Due to the height difference between liquid electrolyte upstream of the hold-up plate and downstream of the hold-up plate, the liquid electrolyte upstream of the hold-up plate can contain a surplus of potential energy.

In each separator plane remains the respective first opening in the lower section of the separator vessel configured to pass through the liquid electrolyte flow.

The liquid electrolyte flow can advantageously flow between the multiple separator plates and through the first openings of the separator planes to the first opening of the hold-up plane.

The purpose of the multiple separator plates together with the first openings in the separator planes is that the liquid electrolyte flow can be slowed down between the multiple separator plates so that product gas bubbles entrapped in the liquid electrolyte flow can rise between the separator plates. Preferably, the product gas bubbles can coalesce to larger product gas bubbles during ascent.

In each separator plane remains the second opening in an upper section of the separator vessel configured to pass through the biphasic flow.

In particular, a part of the liquid electrolyte flow and the product gas flow, wherein part of the product gas flow is entrapped in the liquid electrolyte, can flow through the second openings in the separator planes. It is particularly preferred that the ratio of the product gas flow relative to the liquid electrolyte flow increases from the most upstream separator plate up to the most downstream separator plate.

In the hold-up plane remains the second opening in the upper section of the separator vessel configured to pass through the product gas flow.

Preferably, no liquid electrolyte flow passes through the second opening of the hold-up plane.

Preferably, in the first region of the separator vessel, the biphasic flow can be separated into the product gas flow and into the liquid electrolyte flow. However, in the second region, a possibly remaining product gas flow can be separated from the liquid electrolyte flow.

The advantage of the described configuration is that the biphasic flow is separated more efficiently into the product gas flow and the liquid electrolyte flow. Furthermore, a more efficient separation in the separator vessel can mean a shortened necessary length of the separator vessel.

In a preferred embodiment of the device, the hold-up plate is arranged between the first opening of the hold-up plane in the lower section of the separator vessel and the second opening of the hold-up plane in the upper section of the separator vessel and/or the multiple separator plates are arranged between the first opening of the respective separator plane in the lower section of the separator vessel and the second opening of the respective separator plane in the upper section of the separator vessel.

The "and" case is preferred.

Advantage of the embodiment is that the liquid electrolyte flow can preferably flow through the first openings and the gas flow can preferably flow through the second openings. The incoming biphasic flow is separated more clearly spatially and thus more efficiently into the product gas flow and the liquid electrolyte flow.

In a further preferred embodiment of the device, the multiple separator plates are spaced axially from each other along the horizontal axis with a distance in the range of 0.5 to 15 mm.

Preferably, the multiple separator plates are arranged in parallel to each other.

Advantage of the embodiment is that the liquid electrolyte flow is slowed down sufficiently between the separator plates so that product gas bubbles entrapped in the liquid electrolyte flow can ascend and are no longer dragged down by the flow. The incoming biphasic flow is separated more reliable and more efficient into the product gas flow and the liquid electrolyte flow.

In a further preferred embodiment of the device, the most downstream one of the multiple separator plates and the hold-up plate are spaced from each other axially along the horizontal axis with a distance in the range of 0.5 to 15 mm.

Advantage of the embodiment is that the liquid electrolyte flow is slowed down particularly well between the separator plate and the hold-up plate so that product gas bubbles entrapped in the liquid electrolyte flow can ascend and are no longer dragged down by the flow. The incoming biphasic flow is separated more reliably and more efficiently into the product gas flow and the liquid electrolyte flow.

In a further preferred embodiment of the device, the separator vessel is a horizontal cylinder, wherein a diameter of the separator vessel is between the bottom side of the lower section of the separator vessel and a top side of the upper section of the separator vessel.

The diameter of the separator vessel refers to the inside diameter of the separator vessel.

The bottom side of the lower section of the separator vessel can denote a vertex line in the lower section of the separator vessel. In particular, the bottom side of the lower section of the separator vessel is a straight line of the lowest points in the cylindrical horizontal separator vessel.

The top side of the upper section of the separator vessel can denote a vertex line in the upper section of the separator vessel. In particular, the top side of the upper section of the separator vessel is preferably a straight line of the highest points in the cylindrical horizontal separator vessel.

The two opposite cylinder heads of the separator vessel can be denoted as the first end of the separator vessel and the second end of the separator vessel.

Advantage of the embodiment is a manufacturing advantage and further advantage is that possible dead currents are reduced due to the cylindrical shape of the separator vessel.

In a further preferred embodiment of the device, the multiple separator plates have a respective top side, and a weir distance is between a top side of the hold-up plate and the respective top side of the separator plates, wherein a first ratio defined as the weir distance divided by the diameter of the separator vessel is in the range of 0.05 to 0.25.

Preferably, the top side of the separator plates denote the lowest point of the second opening of the respective separator plane in the upper section of the separator vessel and/or the top side of the hold-up plate denotes the lowest point of the second opening of hold-up plane in the upper section of the separator vessel. The "and" case is preferred. In particular, the weir distance is between the lowest point of the second opening of the hold-up plane and the most elevated top side of the separator plates.

Preferably, the liquid level does not fall below a minimal liquid level.

Advantage of the embodiment is that a certain liquid level in the separator vessel upstream of the hold-up plane can be obtained. Further advantage of the embodiment is that a fluctuating liquid level can be compensated.

In a further preferred embodiment of the device, the multiple separator plates have flat top sides and/or the hold-up plate has a flat top side.

Advantage of the embodiment is that undesired channel flows in the second openings of the separator planes and the hold-up plane can be avoided. Further advantage of the embodiment is that the separator plates and the hold-up plate can be manufactured particularly easily.

In a further preferred embodiment of the device, a first distance between the bottom side of the separator vessel and the top sides of the multiple separator plates is smaller than a second distance between the bottom side of the separator vessel and the top side of the hold-up plate.

Advantage of the embodiment is that the liquid electrolyte flow can advantageously be held-up. The biphasic flow can be separated more efficiently into the product gas flow and the liquid electrolyte flow.

In a further preferred embodiment of the device, a second ratio defined as the first distance divided by the diameter of the separator vessel is in a range of 0.5 to 0.9.

In a further preferred embodiment of the device, a total surface area comprises a cross-sectional area of the separator vessel, a first surface area comprises the area of the first opening in the respective separator plane, wherein a second surface area comprises the area of the first opening in the hold-up plane.

A third ratio defined as the first surface area divided by the total surface area is in a range between 0.03 and 0.45 and/or a fourth ratio defined as the second surface area divided by the total surface area is in a range between 0.03 and 0.45. The "and" case is preferred.

Advantage of the embodiment is that the liquid electrolyte flow through the first openings is limited in that way that a hold-up of the liquid electrolyte flow is obtained.

In a further preferred embodiment of the device, the product gas outlet for the product gas flow is arranged in the upper section of the separator vessel downstream of the hold-up plate and/or the liquid electrolyte outlet for the liquid flow is arranged in the lower section of the separator vessel downstream of the hold-up plate. The "and" case is preferred.

Preferably, the product gas outlet is arranged above the liquid electrolyte outlet. The product gas flow can be discharged from the separator vessel via the product gas outlet. The liquid electrolyte flow can be drained from the separator vessel via the liquid electrolyte outlet. In particular, the liquid flow has a higher density than the product gas flow. Following this condition, it is advantageous to arrange the product gas outlet above the liquid electrolyte outlet. It is particularly preferred that the product gas outlet and the liquid electrolyte outlet are vertically distanced from each other as far as possible. This could mean that the product gas outlet is arranged at the top side of the separator vessel and the liquid electrolyte outlet is arranged at the bottom of the separator vessel.

Advantage of the embodiment is that the product gas flow and the liquid electrolyte flow can be separated particularly easily.

As a further aspect of the invention, an arrangement comprising the device configured as described is presented. The arrangement further comprises an electrolysis stack with a biphasic flow source, which is fluidly connected to the inlet of the separator vessel.

Preferably, the arrangement comprises multiple electrolysis stacks. However, since it is sufficient to have a single electrolysis stack, this case will be focussed on herein. The electrolysis stack comprises multiple electrolysis cells. Within the electrolysis stack the electrolysis of the medium can be performed using the electrolysis cells. Preferably, the arrangement is used for electrolysis in cases with a designed capacity of at least 100 kW.

As a further aspect of the invention, a method to operate the arrangement configured as described is presented, wherein the method comprises the following steps:
▪ Generating the biphasic flow in the electrolysis stack,
▪ Leading the biphasic flow via the inlet into the separator vessel,
▪ Separating the product gas flow and the liquid electrolyte flow from the biphasic flow, wherein the liquid electrolyte flow is guided in between the multiple separator plates through the first openings of the multiple separator planes and through the first opening of the hold-up plane and the gas flow is guided through the second opening of the hold-up plane.

The described advantages and features of the arrangement and the device are applicable and transferable to the method, and vice versa. The arrangement is preferably set up for operation according to the method.

In the following the invention will be described with respect to the figures. The figures show preferred embodiments, to which the invention is not limited. The figures and the dimensions shown therein are only schematic. The figures show:
- Fig. 1:: a schematic representation of a known gas-liquid separator from the state of the art,
- Fig. 2:: a schematic representation of a device according to the invention,
- Fig. 3:: a schematic representation of a configuration of a separator plate applicable in the device from Fig.2,
- Fig. 4:: a schematic representation of a further configuration of a separator plate applicable in the device from Fig.2,
- Fig. 5:: a schematic representation of a configuration of a hold-up plate applicable in the device from Fig.2,
- Fig. 6:: a schematic representation of a further configuration of a hold-up plate applicable in the device from Fig.2,
- Fig. 7:: a schematic representation of an arrangement according to the invention.

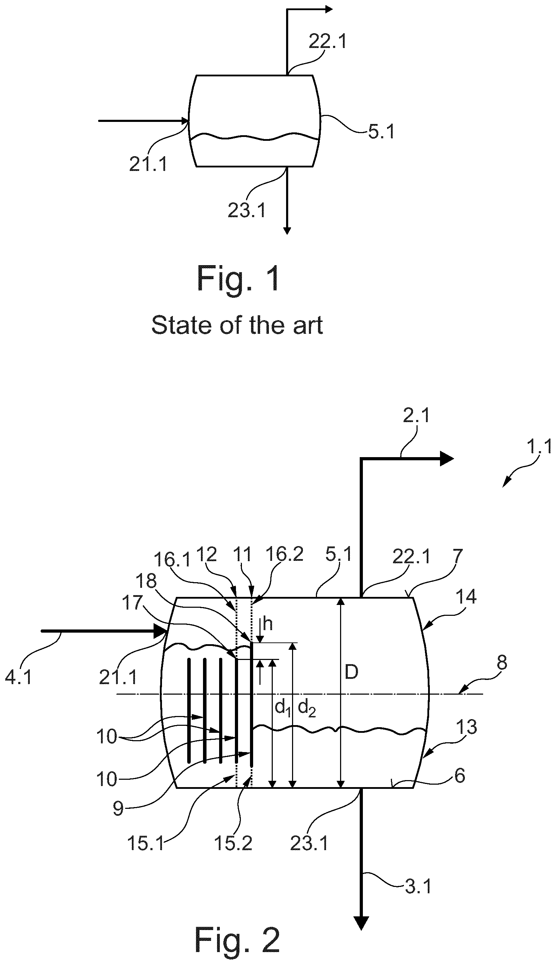

Figure 1 shows a schematic representation of a known gas-liquid separator from the state of the art. In the state of the art, a biphasic flow is let into the separator vessel via the biphasic flow inlet 21.1. In the separator vessel 5.1 the biphasic flow separates along the separator vessel 5.1 into a liquid electrolyte flow and a product gas flow. The product gas flow is discharged from a product gas outlet 22.1 and the liquid electrolyte flow is drained from a liquid electrolyte outlet 23.1.

Figure 2 shows a schematic representation of a device 1.1 for separating a gas flow 2.1 and a liquid electrolyte flow 3.1 from a biphasic flow 4.1 according to the invention.

The device 1.1 comprises a separator vessel 5.1 oriented along a horizontal axis 8, a hold-up plate 9, and multiple separator plates 10. The separator vessel 5.1 comprises a biphasic flow inlet 21.1 and a product gas outlet 22.1 and a liquid electrolyte outlet 23.1. The hold-up plate 9 and the multiple separator plates 10 are arranged in the separator vessel 5.1, wherein the hold-up plate 9 is arranged downstream of the multiple separator plates 10. The hold-up plate 9 is arranged in a hold-up plane 11, and the multiple separator plates 10 are arranged in respective separator planes 12. The multiple separator planes 10 are distanced axially from each other along the horizontal axis 8. In each separator plane 12 remains a respective first opening 15.1 in a lower section 13 of the separator vessel 5.1 configured to pass through the liquid electrolyte flow 3.1. In the hold-up plane 11 remains a first opening 15.2 in the lower section 13 of the separator vessel 5.1 configured to pass through the liquid electrolyte flow 3.1. In each separator plane 12 remains a second opening 16.1 in an upper section 14 of the separator vessel 5.1 configured to pass through the biphasic flow 4.1 and in the hold-up plane 11 remains a second opening 16.2 in the upper section 14 of the separator vessel 5.1 configured to pass through the product gas flow 2.1.

The second opening 16.1 of each separator plane 12 extends further towards a bottom side 6 of the lower section 13 of the separator vessel 5.1 than the second opening 16.2 of the hold-up plane 11.

The hold-up plate 9 is arranged between the first opening 15.2 of the hold-up plane 11 in the lower section 13 of the separator vessel 5.1 and the second opening 16.2 of the hold-up plane 11 in the upper section 14 of the separator vessel 5.1. The multiple separator plates 10 are arranged between the first opening 15.1 of the respective separator plane 12 in the lower section 13 of the separator vessel 5.1 and the second opening 16.1 of the respective separator planes 12 in the upper section 14 of the separator vessel 5.1.

The multiple separator plates 10 are spaced axially along the horizontal axis 8 with a distance in the range of 0.5 to 15 mm.

The most downstream separator plate of the multiple separator plates 10 and the hold-up plate 9 are spaced axially along the horizontal axis 8 with a distance in the range of 0.5 to 15 mm.

The separator vessel 5.1 is a horizontal cylinder, wherein a diameter D of the separator vessel 5.1 is between the bottom side 6 of the lower section 13 of the separator vessel 5.1 and a top side 7 of the upper section 14 of the separator vessel 5.1.

The multiple separator plates 10 have a respective top side 17, and a weir distance h is between a top side 18 of the hold-up plate 9 and the respective top side 17 of the separator plates 10, wherein a first ratio R₁ defined as the weir distance h divided by the diameter D of the separator vessel 5.1 is in the range of 0.05 to 0.25.

A first distance d₁ between the bottom side 6 of the separator vessel 5.1 and the top sides 17 of the multiple separator plates 10 is smaller than a second distance d₂ between the bottom side 6 of the separator vessel 5.1 and the top side 18 of the hold-up plate 9.

A second ratio R₂ defined as the first distance d₁ divided by the diameter D of the separator vessel 5.1 is in a range of 0.5 to 0.9.

The product gas outlet 22.1 for the product gas flow 2.1 is arranged in the upper section 14 of the separator vessel 5.1 downstream of the hold-up plate 9 and the liquid electrolyte outlet 23.1 for the liquid flow 3.1 is arranged in the lower section 13 of the separator vessel 5.1 downstream of the hold-up plate 9.

With the described configuration the biphasic flow is separated more efficient into the product gas flow and the liquid electrolyte flow.

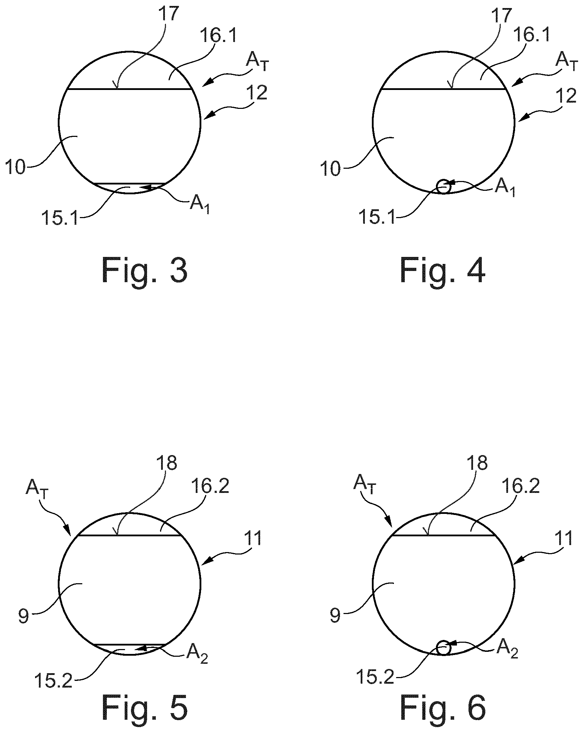

Figure 3 and Figure 4 show schematic representations of configurations of the separator plates 10 applicable in the device 1.1. With reference to Fig. 2, identical reference signs denote identical objects.

A total surface area A_{T} comprises a cross-sectional area of the separator vessel 5.1, wherein a first surface area A₁ comprises the area of the first opening 15.1 in the respective separator plane 12. A third ratio R₃ defined as the first surface area A₁ divided by the total surface area A_{T} is in a range between 0.03 and 0.45.

The multiple separator plates 10 have flat top sides 17. The second opening 16.1 in the separator plane 12 is in a segmental shape. In Figure 3, the first opening 15.1 in the separator plane 12 is in a segmental shape. In Figure 4, the first opening 15.1 in the separator plane 12 is round.

Figure 5 and Figure 6 show schematic representations of configurations of the hold-up plate 9 applicable in the device 1.1. With reference to Fig. 2, identical reference signs denote identical objects. A second surface area A₂ comprises the area of the first opening 15.2 in the hold-up plane 11. A fourth ratio R₄ defined as the second surface area A₂ divided by the total surface area A_{T} is in a range between 0.03 and 0.45.

The hold-up plate 9 has a flat top side 18. The second opening 16.2 in the hold-up plane 11 is in a segmental shape. In Figure 5, the first opening 15.2 in the hold-up plane 11 is in a segmental shape. In Figure 6, the first opening 15.2 in the hold-up plane 11 is round.

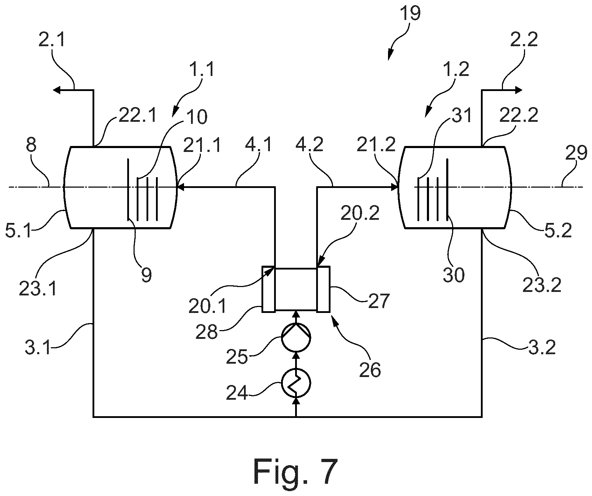

Figure 7 shows a schematic representation of an arrangement 19 according to the invention. The arrangement 19 comprises the device 1.1 for separating a gas flow 2.1 and a liquid electrolyte flow 3.1 from a biphasic flow 4.1, depicted in Fig. 2, and an electrolysis stack 26 with a biphasic flow source 20.1, which is fluidly connected to the inlet 21.1 of the separator vessel 5.1, wherein the biphasic flow source 20.1 comprises the product gas flow 2.1 and the liquid electrolyte flow 3.1. The electrolysis stack 26 has an anode side 28 and a cathode side 27. The device 1.1 is arranged at the anode side 28.

The device 1.1 comprises the separator vessel 5.1 oriented along the horizontal axis 8, the hold-up plate 9, and multiple separator plates 10.

The biphasic flow source 20.1 is arranged at the anode side 28. The biphasic flow source 20.1 is fluidly connected to the inlet 21.1 of the separator vessel 5.1. The biphasic flow source 20.1 comprises the product gas flow 2.1 and the liquid electrolyte flow 3.1. The separator vessel 5.1 comprises the product gas outlet 22.1 and the liquid electrolyte outlet 23.1.

The arrangement comprises a further cathode side device 1.2 being analogous configured to the device 1.1, however arranged at the cathode side 27 of the electrolysis stack 26.

The biphasic flow source 20.2 is arranged at the cathode side 27. The cathode side device 1.2 is configured for separating a cathode side gas flow 2.2 and a cathode side liquid electrolyte flow 3.2 from a cathode side biphasic flow 4.2. The device 1.2 is configured according to the device 1.1. A cathode side biphasic flow source 20.2 is fluidly connected to the cathode side inlet 21.2 of a cathode side separator vessel 5.2. The cathode side biphasic flow source 20.2 comprises the cathode side product gas flow 2.2 and the cathode side liquid electrolyte flow 3.2.

Analogously to the device 1.1, the cathode side device 1.2 comprises the cathode side separator vessel 5.2 oriented along a cathode side horizontal axis 29, a cathode side hold-up plate 30, and multiple cathode side separator plates 31. The cathode side hold-up plate 30 and the multiple cathode side separator plates 31 are arranged in the cathode side separator vessel 5.2, wherein the cathode side hold-up plate 30 is arranged downstream of the multiple cathode side separator plates 31. The cathode side separator vessel 5.2 comprises a cathode side product gas outlet 22.2 and a cathode side liquid electrolyte outlet 23.2.

The liquid electrolyte flow 3.1 leaving the separator vessel 5.1 and the cathode side liquid electrolyte flow 3.2 leaving the cathode side separator vessel 5.2 are mixed and pumped by a pump 25 to the electrolysis stack 26. Surplus heat of the liquid electrolyte flow 3.1 and of the cathode side liquid electrolyte flow 3.2 is dissipated by a heat exchanger 24 upstream of the pump 25.

To operate the arrangement 19 with the device 1.1, the following steps are conducted:
▪ Generating the biphasic flow 4.1 in the biphasic flow source 20.1 at the anode side 28 of the electrolysis stack 26,
▪ Leading the biphasic flow 4.1 via the inlet 21.1 into the separator vessel 5.1,
▪ Separating the product gas flow 2.1 and the liquid electrolyte flow 3.1 from the biphasic flow 4.1, wherein the liquid electrolyte flow 3.1 is guided in between the multiple separator plates 10 through the first openings 15.1 of the multiple separator planes 12 and through the first opening 15.2 of the hold-up plane 11 and the gas flow 2.1 is guided through the second opening 16.2 of the hold-up plane 11,
▪ Recycling the liquid electrolyte flow 3.1 to the electrolysis stack 26.

The cathode side device 1.2 can be operated analogously at the cathode side 27.

At the anode side 28, the liquid electrolyte flow 3.1 comprises water, and the product gas flow 2.1 comprises oxygen as an electrolysis product. At the cathode side 27, liquid electrolyte flow 3.2 comprises water, and the product gas flow 2.2 comprises hydrogen as an electrolysis product.

### List of reference signs

- 1.1; 1.2: device
- 2.1; 2.2: product gas flow
- 3.1; 3.2: liquid electrolyte flow
- 4.1; 4.2: biphasic flow
- 5.1; 5.2: separator vessel
- 6: bottom side of separator vessel
- 7: top side of separator vessel
- 8: horizontal axis
- 9: hold-up plate
- 10: separator plate
- 11: hold-up plane
- 12: separator plane
- 13: lower section of separator vessel
- 14: upper section of separator vessel
- 15.1; 15.2: first opening
- 16.1; 16.2: second opening
- 17: top side of separator plate
- 18: top side of hold-up plate
- 19: arrangement
- 20.1; 20.2: biphasic flow source
- 21.1; 21.2: biphasic flow inlet
- 22.1; 22.2: product gas outlet
- 23.1; 23.1: liquid electrolyte outlet
- 24: heat exchanger
- 25: pump
- 26: electrolysis stack
- 27: cathode side
- 28: anode side
- 29: cathode side horizontal axis
- 30: cathode side hold-up plate
- 31: cathode side separator plate

- A₁: first surface area
- A₂: second surface area
- A_{T}: total surface area
- d₁: first distance
- d₂: second distance
- h: weir distance
- D: diameter of separator vessel

## Claims

1. Device (1.1) for separating a gas flow (2.1) and a liquid electrolyte flow (3.1) from a biphasic flow (4.1) comprising:
▪ a separator vessel (5.1) oriented along a horizontal axis (8),
▪ a hold-up plate (9), and
▪ multiple separator plates (10),
wherein the separator vessel (5.1) comprises a biphasic flow inlet (21.1) and a product gas outlet (22.1) and a liquid electrolyte outlet (23.1), wherein the hold-up plate (9) and the multiple separator plates (10) are arranged in the separator vessel (5.1), wherein the hold-up plate (9) is arranged downstream of the multiple separator plates (10),
wherein the hold-up plate (9) is arranged in a hold-up plane (11), and the multiple separator plates (10) are arranged in respective separator planes (12), wherein the multiple separator planes (10) are distanced axially from each other along the horizontal axis (8),
wherein in each separator plane (12) remains a respective first opening (15.1) in a lower section (13) of the separator vessel (5.1) configured to pass through the liquid electrolyte flow (3.1) and in the hold-up plane (11) remains a first opening (15.2) in the lower section (13) of the separator vessel (5.1) configured to pass through the liquid electrolyte flow (3.1),
wherein in each separator plane (12) remains a second opening (16.1) in an upper section (14) of the separator vessel (5.1) configured to pass through the biphasic flow (4.1) and in the hold-up plane (11) remains a second opening (16.2) in the upper section (14) of the separator vessel (5.1) configured to pass through the product gas flow (2.1),
wherein the second opening (16.1) of each separator plane (12) extends further towards a bottom side (6) of the lower section (13) of the separator vessel (5.1) than the second opening (16.2) of the hold-up plane (11).

2. Device (1.1) according to claim 1, wherein the hold-up plate (9) is arranged between the first opening (15.2) of the hold-up plane (11) in the lower section (13) of the separator vessel (5.1) and the second opening (16.2) of the hold-up plane (11) in the upper section (14) of the separator vessel (5.1)
and/or
wherein the multiple separator plates (10) are arranged between the first opening (15.1) of the respective separator plane (12) in the lower section (13) of the separator vessel (5.1) and the second opening (16.1) of the respective separator plane (12) in the upper section (14) of the separator vessel (5.1).

3. Device (1.1) according to one of the previous claims, wherein the multiple separator plates (10) are spaced from each other axially along the horizontal axis (8) with a distance in the range of 0.5 to 15 mm.

4. Device (1.1) according to one of the previous claims, wherein the most downstream one of the multiple separator plates (10) and the hold-up plate (9) are spaced from each other axially along the horizontal axis (8) with a distance in the range of 0.5 to 15 mm.

5. Device (1.1) according to one of the previous claims, wherein the separator vessel (5.1) is a horizontal cylinder, wherein a diameter (D) of the separator vessel (5.1) is between the bottom side (6) of the lower section (13) of the separator vessel (5.1) and a top side (7) of the upper section (14) of the separator vessel (5.1).

6. Device according to claim 5, wherein the multiple separator plates (10) have a respective top side (17), and a weir distance (h) is between a top side (18) of the hold-up plate (9) and the respective top side (17) of the separator plates (10), wherein a first ratio (R₁) defined as the weir distance (h) divided by the diameter (D) of the separator vessel (5.1) is in the range of 0.05 to 0.25.

7. Device (1.1) according to claim 6, wherein a first distance (d₁) between the bottom side (6) of the separator vessel (5.1) and the top sides (17) of the multiple separator plates (10) is smaller than a second distance (d₂) between the bottom side (6) of the separator vessel (5.1) and the top side (18) of the hold-up plate (9).

8. Device (1.1) according to one of the claims 5 to 7, wherein a second ratio (R₂) defined as the first distance (d₁) divided by the diameter (D) of the separator vessel (5.1) is in a range of 0.5 to 0.9.

9. Device (1.1) according to one of the previous claims, wherein the product gas outlet (22.1) for the product gas flow (2.1) is arranged in the upper section (14) of the separator vessel (5.1) downstream of the hold-up plate (9) and/or
the liquid electrolyte outlet (23.1) for the liquid flow (3.1) is arranged in the lower section (13) of the separator vessel (5.1) downstream of the hold-up plate (9).

10. Device (1.1) according to one of the previous claims, wherein a total surface area (A_{T}) comprises a cross-sectional area of the separator vessel (5.1),
wherein a first surface area (A₁) comprises the area of the first opening (15.1) in the respective separator plane (12),
wherein a second surface area (A₂) comprises the area of the first opening (15.2) in the hold-up plane (11),
wherein a third ratio (R₃) defined as the first surface area (A₁) divided by the total surface area (A_{T}) is in a range between 0.03 and 0.45,
and/or
wherein a fourth ratio (R₄) defined as the second surface area (A₂) divided by the total surface area (A_{T}) is in a range between 0.03 and 0.45.

11. Arrangement (19) comprising a device (1.1) according to one of the claims 1 to 10, and further comprising an electrolysis stack (26) as a biphasic flow source (20.1), which is fluidly connected to the inlet (21.1) of the separator vessel (5.1).

12. Method to operate an arrangement (19) according to claim 11, comprising the steps:
▪ Generating the biphasic flow (4.1) in the electrolysis stack (26),
▪ Leading the biphasic flow via the inlet (21.1) into the separator vessel (5.1),
▪ Separating the product gas flow (2.1) and the liquid electrolyte flow (3.1) from the biphasic flow (4.1), wherein the liquid electrolyte flow (3.1) is guided in between the multiple separator plates (10) through the first openings (15.1) of the multiple separator planes (12) and through the first opening (15.2) of the hold-up plane (11) and the gas flow (2.1) is guided through the second opening (16.2) of the hold-up plane (11).
